(19) Europäisches Patentamt
European Patent Office
Office européen des brevets

(11) **EP 4 624 505 A1**

(12) **EUROPEAN PATENT APPLICATION**
published in accordance with Art. 153(4) EPC

(43) Date of publication:
**01.10.2025 Bulletin 2025/40**

(21) Application number: **23907065.9**

(22) Date of filing: **19.12.2023**

(51) International Patent Classification (IPC):
*C08G 18/40* (2006.01)      *C08G 18/10* (2006.01)
*C08G 18/22* (2006.01)      *C08G 18/44* (2006.01)
*C08G 18/48* (2006.01)      *C08G 18/76* (2006.01)
*C09D 7/63* (2018.01)      *C09D 175/04* (2006.01)

(52) Cooperative Patent Classification (CPC):
**C08G 18/10; C08G 18/22; C08G 18/40;**
**C08G 18/44; C08G 18/48; C08G 18/76; C09D 7/63;**
**C09D 175/04**

(86) International application number:
**PCT/JP2023/045575**

(87) International publication number:
**WO 2024/135705 (27.06.2024 Gazette 2024/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **21.12.2022 JP 2022204048**

(71) Applicant: **Tosoh Corporation**
**Yamaguchi 746-8501 (JP)**

(72) Inventors:
• **TAKEUCHI, Yuya**
**Yokkaichi-shi, Mie 510-8540 (JP)**
• **IBE ,Yusuke**
**Yokkaichi-shi, Mie 510-8540 (JP)**

(74) Representative: **TBK**
**Bavariaring 4-6**
**80336 München (DE)**

(54) **MOLDABLE POLYURETHANE RESIN COMPOSITION, POLYURETHANE RESIN, MOLDED BODY, AND COATING AGENT**

(57)      A polyurethane resin-forming composition contains: a main agent containing a polyol component; a curing agent containing a polyisocyanate component; and a catalyst, in which the polyol component contains a first polyol having three or more hydroxyl groups and a second polyol having two hydroxyl groups, the first polyol contains a polycarbonate polyester polyol, the polyisocyanate component contains an isocyanate group-terminated urethane prepolymer having a segment derived from diphenylmethane diisocyanate and a segment derived from a polyether polyol, the catalyst includes a metal catalyst containing at least one metallic element selected from the group consisting of titanium, zinc, and aluminum, and a content of the organic solvent is 0% to 10% by mass.

## Description

### Technical Field

The present disclosure relates to a polyurethane resin-forming composition, a polyurethane resin, a molded body, and a coating agent.

### Background Art

A polyurethane resin-forming composition containing a large amount of an organic solvent has been widely used for coating agents, paints, adhesive agents, printing inks, and the like because the polyurethane resin-forming composition has high adhesion to various materials and is excellent in various physical properties. However, in recent years, there has been a demand for a polyurethane resin-forming composition that contains a reduced amount of an organic solvent in order to reduce an environmental load.

For example, Patent Literature 1 discloses a solvent-free reactive adhesive agent that contains a trimethylolpropane adduct of tolylene diisocyanate or diphenylmethane diisocyanate, further contains a polyisocyanate containing an aromatic polyisocyanate (where, excluding a trimethylolpropane adduct of tolylene diisocyanate or diphenylmethane diisocyanate), and a polyol, the solvent-free reactive adhesive agent containing a specific amount of the trimethylolpropane adduct.

Patent Literature 2 discloses a two-component solvent-free adhesive agent containing an isocyanate component that contains an isocyanate prepolymer serving as a reaction product of reactants including at least one polyisocyanate, at least one polyol selected from the group consisting of a polyester polyol, a polyether polyol, and a combination thereof, and at least one polyol having two or more OH groups and a hydrogen-bridging group, and a polyol component that contains at least one polyol selected from the group consisting of a polyester polyol, a polyether polyol, and a combination thereof.

### Citation List

### Patent Literatures

Patent Literature 1: Japanese Unexamined Patent Publication No. 2022-082441

Patent Literature 2: Japanese Unexamined Patent Publication No. 2021-107555

### Summary of Invention

### Technical Problem

However, a polyurethane resin formed from a conventional solvent-free polyurethane resin-forming composition has insufficient low-temperature flexibility. In addition, a long pot life is required from the viewpoint of workability, but it is not necessarily easy to extend the pot life.

Some aspects of the present disclosure are directed to providing a polyurethane resin-forming composition that contains a reduced amount of an organic solvent while having a long pot life and contributing to the production of a polyurethane resin with excellent low-temperature flexibility, and a coating agent that contains the polyurethane resin-forming composition. Some other aspects of the present disclosure are directed to providing a polyurethane resin formed from the polyurethane resin-forming composition, and a molded body composed of a cured product of the polyurethane resin-forming composition.

### Solution to Problem

Each aspect of the present disclosure includes the following embodiments [1] to [12].

[1] A polyurethane resin-forming composition containing: a main agent containing a polyol component; a curing agent containing a polyisocyanate component; and a catalyst, in which the polyol component contains a first polyol having three or more hydroxyl groups and a second polyol having two hydroxyl groups, the first polyol contains a polycarbonate polyester polyol, the polyisocyanate component contains an isocyanate group-terminated urethane prepolymer having a segment derived from diphenylmethane diisocyanate and a segment derived from a polyether polyol, the catalyst includes a metal catalyst containing at least one metallic element selected from the group consisting of titanium, zinc, and aluminum, and a content of the organic solvent is 0% to 10% by mass.

[2] The polyurethane resin-forming composition according to [1], in which the first polyol contains a polycarbonate polyester polyol having a structure formed by ring-opening addition polymerization of a cyclic ester compound.

[3] The polyurethane resin-forming composition according to [1] or [2], in which the second polyol contains a diol having a carbonate group.

[4] The polyurethane resin-forming composition according to any one of [1] to [3], in which the second polyol contains a polycarbonate polyester diol.

[5] The polyurethane resin-forming composition according to any one of [1] to [4], in which the main agent contains a reaction product of a polycarbonate diol, a polyester polyol having three or more hydroxyl groups, and a polyester diol.

[6] The polyurethane resin-forming composition according to [5], in which the reaction product has an average number of hydroxyl groups of 2.1 to 3.5.

[7] The polyurethane resin-forming composition according to any one of [1] to [6], in which a content of the segment derived from the polyether polyol in the isocyanate group-terminated urethane prepolymer is 20% to 80% by mass based on a total mass of the isocyanate group-terminated urethane prepolymer.

[8] The polyurethane resin-forming composition according to any one of [1] to [7], in which the polyisocyanate component has an isocyanate group content of 4% to 30% by mass.

[9] The polyurethane resin-forming composition according to any one of [1] to [8], in which the catalyst is in a liquid state at 25°C.

[10] A polyurethane resin formed from the polyurethane resin-forming composition according to any one of [1] to [9].

[11] A molded body containing a cured product of the polyurethane resin-forming composition according to any one of [1] to [9].

[12] A coating agent containing the polyurethane resin-forming composition according to any one of [1] to [9].

**Advantageous Effects of Invention**

According to some aspects of the present disclosure, it is possible to provide the polyurethane resin-forming composition while having a long pot life and contributing to the production of a polyurethane resin with excellent low-temperature flexibility, and the coating agent that contains the polyurethane resin-forming composition. According to some other aspects of the present disclosure, it is also possible to provide a polyurethane resin formed from the polyurethane resin-forming composition, and a molded body composed of a cured product of the polyurethane resin-forming composition.

**Description of Embodiments**

Hereinafter, embodiments of the present disclosure will be described in detail. Note that, in the present specification, a numerical range indicated by using "to" refers to a range that includes the numerical values described before and after "to" as the minimum and maximum values, respectively. The minimum value or the maximum value of the numerical range indicated by using "to" can be arbitrarily combined with the maximum or minimum value of another numerical range indicated by using "to". Furthermore, the individually described upper and lower limit values can be arbitrarily combined.

<Polyurethane resin-forming composition>

An aspect of the present disclosure is a polyurethane resin-forming composition (hereinafter, also referred to as simply the "composition") that contains: a main agent containing a polyol component; a curing agent containing a polyisocyanate component; and a catalyst, in which the polyol component contains a first polyol having three or more hydroxyl groups and a second polyol having two hydroxyl groups, the first polyol contains a polycarbonate polyester polyol, the polyisocyanate component contains an isocyanate group-terminated urethane prepolymer having a segment derived from diphenylmethane diisocyanate and a segment derived from a polyether polyol, the catalyst includes a metal catalyst containing at least one metallic element selected from the group consisting of titanium, zinc, and aluminum, and a content of the organic solvent is 0% to 10% by mass.

The composition may be a one-component composition that contains all constituent components in a single liquid, or may be a multi-component composition that contains constituent components separated in a plurality of liquids. For example, the composition may include a first liquid containing a main agent and a second liquid containing a curing agent. The composition may include the first liquid, the second liquid, and a third liquid that is different from the first liquid and the second liquid. In a case where the composition is a multi-component composition, other constituent components (catalyst or the like) may be contained in the first liquid, may be contained in the second liquid, or may be contained in the third liquid.

The composition is cured by the reaction between the main agent and the curing agent to form a cured product containing a polyurethane resin. According to the composition, a polyurethane resin having excellent low-temperature flexibility can be obtained. Furthermore, since the composition has a long pot life, the composition exhibits excellent workability. Furthermore, the composition also tends to be excellent in curability, and the composition can achieve both a long pot life and a short pre-curing time. Therefore, the composition can also be referred to as a polyurethane resin-forming composition (for example, a solvent-free reactive curable polyurethane resin-forming composition) that is environmentally friendly during production.

Furthermore, the polyurethane resin formed from the composition tends to have excellent tensile properties. Specifically, for example, the polyurethane resin tends to be excellent in durability in a normal state (that is, tensile properties as determined by breaking strength), heat resistance (heat resistance durability), and wet heat resistance (wet heat resistance durability).

Hereinafter, components contained in the composition will be described.

(Main Agent)

The main agent contains a polyol component. The polyol component includes a component containing a compound (polyol) having two or more hydroxyl groups, and contains a first polyol having three or more hydroxyl groups and a second polyol having two hydroxyl groups.

[First Polyol]

The first polyol contains a polycarbonate polyester polyol. The polycarbonate polyester polyol has two or more carbonate units, two or more ester units, and three or more hydroxyl groups.

The polycarbonate polyester polyol is obtained by, for example, transesterification of a polycarbonate polyol and a polyester polyol. Therefore, the polycarbonate polyester polyol has, for example, a segment derived from the polycarbonate polyol and a segment derived from the polyester polyol.

The polycarbonate polyester polyol is preferably a compound having a segment derived from a polycarbonate diol (hereinafter, referred to as a "polyol (p1)") and a segment derived from a polyester polyol (hereinafter, referred to as a "polyol (p2)") having three or more hydroxyl groups (for example, the compound can be obtained by the reaction of the polyol (p1) with the polyol (p2)), and more preferably a compound having the segment derived from the polyol (p1), the segment derived from the polyol (p2), and a segment derived from a polyester diol (hereinafter, referred to as a "polyol (p3)") (for example, the compound can be obtained by the reaction of the polyol (p1), the polyol (p2), and the polyol (p3)). The polyols (p1) to (p3) may be used singly or in combination of two or more kinds thereof.

The polyol (p1) has two or more carbonate units and two hydroxyl groups. The polyol (p1) is preferably a compound having a segment derived from carbonates and a segment derived from a bifunctional alcohol (for example, the compound can be obtained by the reaction of carbonates with a bifunctional alcohol).

Examples of the carbonates include dialkyl carbonates such as dimethyl carbonate and diethyl carbonate; alkylene carbonates such as ethylene carbonate and propylene carbonate; and diaryl carbonates such as diphenyl carbonate, dinaphthyl carbonate, dianthryl carbonate, diphenanthryl carbonate, diindanyl carbonate, and tetrahydronaphthyl carbonate. These may be used singly or in combination of two or more kinds thereof.

Examples of the bifunctional alcohol include ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylolheptane, diethylene glycol, dipropylene glycol, neopentyl glycol, cyclohexane-1,4-diol, cyclohexane-1,4-dimethanol, dimer diol, ethylene oxide and propylene oxide adducts of bisphenol A, bis($\beta$-hydroxyethyl)benzene, and xylylene glycol. These may be used singly or in combination of two or more kinds thereof.

The number-average molecular weight of the polyol (p1) is preferably 400 to 5,000 and more preferably 500 to 3,000 in consideration of ease of synthesis and ease of handling. Note that, the number-average molecular weight in the present specification is a value in terms of standard polystyrene measured by gel permeation chromatography (GPC).

The polyol (p2) has two or more ester units and three or more hydroxyl groups. The polyol (p2) is preferably a compound having a segment derived from a polyhydric alcohol and a segment derived from a dicarboxylic acid or a cyclic ester compound (for example, the compound can be obtained by the reaction of a polyol containing a polyhydric alcohol with a dicarboxylic acid, or the compound can be obtained by ring-opening addition polymerization of a cyclic ester compound using a polyol containing a polyhydric alcohol as an initiator). It can also be said that the polyol (p2) having a segment derived from a cyclic ester compound has a structure formed by ring-opening addition polymerization of a cyclic ester compound. The polyol (p2) more preferably has a structure formed by ring-opening addition polymerization of a cyclic ester compound from the viewpoint of obtaining more excellent low-temperature flexibility and from the viewpoint of improving stability and economic efficiency during polymerization.

Examples of the polyhydric alcohol include trimethylolpropane, glycerin, pentaerythritol, and sorbitol. These may be used singly or in combination of two or more kinds thereof.

Examples of the dicarboxylic acid include oxalic acid, malonic acid, maleic acid, adipic acid, tartaric acid, pimelic acid, sebacic acid, phthalic acid, and terephthalic acid. These may be used singly or in combination of two or more kinds thereof.

Examples of the cyclic ester compound include lactones. Examples of the lactones include $\beta$-propiolactone, $\beta$-butyrolactone, $\gamma$-butyrolactone, $\beta$-valerolactone, $\gamma$-valerolactone, $\delta$-valerolactone, $\alpha$-caprolactone, $\beta$-caprolactone, $\gamma$-caprolactone, $\delta$-caprolactone, $\epsilon$-caprolactone, $\alpha$-methyl-$\epsilon$-caprolactone, $\beta$-methyl-$\epsilon$-caprolactone, 4-methylcaprolactone, $\gamma$-caprylolactone, $\epsilon$-caprylolactone, and $\epsilon$-palmitolactone. These may be used singly or in combination of two or more kinds thereof.

The polyol (p2) is preferably a ring-opening addition polymer obtained by polymerization of $\epsilon$-caprolactone with trimethylolpropane as an initiator from the viewpoint of stability and economy during polymerization.

The polyol (p2) may have a segment derived from a bifunctional alcohol. That is, the polyol containing the polyhydric alcohol may contain a bifunctional alcohol. Examples of the bifunctional alcohol include the same bifunctional alcohols as those listed for the polyol (p1).

The number-average molecular weight of the polyol (p2) is preferably 400 to 5,000 and more preferably 500 to 3,000 from the viewpoint of ease of synthesis and ease of handling.

The polyol (p3) has two or more ester units and two hydroxyl groups. The polyol (p3) is preferably a compound having a segment derived from a bifunctional alcohol and a segment derived from a polybasic acid component or a cyclic ester compound (for example, the compound can be obtained by the reaction of a bifunctional alcohol with a polybasic acid component, or the compound can be obtained by ring-opening addition polymerization of a cyclic ester compound using a bifunctional alcohol as an initiator). It can also be said that the polyol (p3) having a segment derived from a cyclic ester compound has a structure formed by ring-opening addition polymerization of a cyclic ester compound. The polyol (p3) more preferably has a structure formed by ring-opening addition polymerization of a cyclic ester compound from the viewpoint of stability and economy during polymerization.

Examples of the bifunctional alcohol include the same bifunctional alcohols as those listed for the polyol (p1). Examples of the polybasic acid component include the same dicarboxylic acids as those listed for the polyol (p2). Examples of the cyclic ester compound include lactones, and examples of the lactones include the same lactones as those listed for the polyol (p2). These may be used singly or in combination of two or more kinds thereof.

The polyol (p3) is preferably a ring-opening addition polymer obtained by polymerization of $\epsilon$-caprolactone with ethylene glycol as an initiator from the viewpoint of stability and economy during polymerization.

The number-average molecular weight of the polyol (p3) is preferably 400 to 5,000 and more preferably 500 to 3,000 from the viewpoint of ease of synthesis and ease of handling.

In the polycarbonate polyester polyol, the ratio ((p1)/(p2)) of the content of the segment derived from the polyol (p1) to the content of the segment derived from the polyol (p2) is preferably 90/10 to 55/45, and more preferably 90/10 to 60/40 in terms of a mass ratio.

In a case where the polyol (p3) is used in combination, the ratio ((p1)/(p2 + p3)) of the content of the segment derived from the polyol (p1) to the total content of the segment derived from the polyol (p2) and the segment derived from the polyol (p3) is preferably 75/25 to 45/55, and more preferably 70/30 to 50/50 in terms of a mass ratio.

Since the mass ratio is within the above-described range, the balance among the cohesive force of the polyol (p1), the urethane group concentration, and the content of the polyol (p2) is improved, and furthermore, a polyurethane resin having mechanical properties of high strength and high elongation is easily obtained.

As described above, the polycarbonate polyester polyol according to a particularly preferred aspect has, as the segment derived from the polyol (p1), a segment derived from carbonates and a segment derived from a bifunctional alcohol, and has, as the segment derived from the polyol (p2), a segment derived from a polyhydric alcohol and a segment derived from a dicarboxylic acid or a cyclic ester compound. Furthermore, in a case where the polycarbonate polyester polyol has the segment derived from the polyol (p3) in addition to the above-described segments, the polycarbonate polyester polyol has, as the segment, a segment derived from a bifunctional alcohol and a segment derived from a polybasic acid component or a cyclic ester compound.

The polycarbonate polyester polyol preferably has a structure formed by ring-opening addition polymerization of a cyclic ester compound from the viewpoint of stability and economy during polymerization.

The polycarbonate polyester polyol preferably contains no ether bond. As a result, ether bonds (ether bonds derived from an isocyanate group-terminated urethane prepolymer described later) in the polyurethane resin are uniformly disposed in a well-balanced manner, and it is possible to achieve both strength and durability and excellent low-temperature flexibility at a higher level.

The first polyol may contain one polycarbonate polyester polyol alone or two or more polycarbonate polyester polyols. The average number of hydroxyl groups (number of hydroxyl groups per molecule) of all the polycarbonate polyester polyols contained in the first polyol is, for example, 3 to 5.

The first polyol may consist only of a polycarbonate polyester polyol. The first polyol may contain a polyol other than the polycarbonate polyester polyol (for example, the polyol (p2) or the like as a raw material) as long as the effect of the present invention is not impaired. The content of the polycarbonate polyester polyol in the first polyol may be 30% to 100% by mass or 50% to 100% by mass based on the total mass of the first polyol from the viewpoint of achieving a higher degree of both strength and elongation in mechanical properties and improving durability under heat conditions and wet heat conditions.

The first polyol is preferably in a liquid state at 25°C from the viewpoint of ease of handling, uniform dispersibility, improvement in physical properties of a coating film, and reduction in curing time/curing energy of the coating film.

[Second Polyol]

The second polyol is not particularly limited as long as it is a polyol having two hydroxyl groups (that is, diol). Examples of the second polyol include polycarbonate diol, polycarbonate polyester diol, polyester diol, and polyether diol. The second polyol may contain the polyol (p1), the polyol (p3) and the like, which are raw materials for the first polyol. These diols may be used singly or in combination of two or more kinds thereof.

From the viewpoint of the strength and durability of the resulting polyurethane resin, the second polyol preferably contains a diol having a carbonate group, more preferably contains a polycarbonate diol or a polycarbonate polyester diol, and still more preferably contains a polycarbonate polyester diol.

The second polyol may consist only of a diol having a carbonate group. The content of the diol having a carbonate group in the second polyol may be 50% to 70% by mass or 70% to 100% by mass based on the total mass of the second polyol from the viewpoint of achieving a higher degree of both strength and elongation in mechanical properties and improving durability under heat conditions and wet heat conditions.

The second polyol preferably contains a polymer having a number-average molecular weight of 300 to 5,000. In a case where the number-average molecular weight of the polymer is 300 or more, the low-temperature flexibility of the resulting polyurethane resin is further improved. Furthermore, in a case where the number-average molecular weight of the polymer is 5,000 or less, the strength of the polyurethane resin is further improved. The polymer is preferably a diol having a carbonate group, more preferably a polycarbonate diol or a polycarbonate polyester diol, and still more preferably a polycarbonate polyester diol. The number-average molecular weight of the polymer preferably is 500 to 3,000.

The second polyol may consist only of a polymer having a number-average molecular weight of 300 to 5,000. The content of the polymer may be 50% to 70% by mass or 70% to 100% by mass based on the total mass of the second polyol from the viewpoint of achieving a higher degree of both strength and elongation in mechanical properties and improving durability under heat conditions and wet heat conditions.

The second polyol is preferably in a liquid state at 25°C from the viewpoint of ease of handling, uniform dispersibility, improvement in physical properties of a coating film, and reduction in curing time/curing energy of the coating film.

The ratio of the content of the second polyol to the content of the first polyol (second polyol/first polyol) may be 40/60 to 95/5, 50/50 to 95/5, 60/40 to 90/10, or 80/20 to 90/10 in terms of a mass ratio from the viewpoint of excellent mechanical properties.

In one embodiment, the main agent may include a reaction product of the polyol (p1) and the polyol (p2) (hereinafter, referred to as a "reaction product (i)"), or may include a reaction product of the polyol (p1), the polyol (p2), and the polyol (p3) (hereinafter, referred to as a "reaction product (ii)"). These reaction products contain at least a polycarbonate polyester polyol that is the first polyol described above. Note that details of the polyols (p1) to (p3) are the same as those described above, and the detailed description will not be repeated.

The reaction products (i) and (ii) may be a reaction mixture obtained by transesterification of the polyols. Therefore, the reaction products (i) and (ii) may contain by-products (for example, the second polyol, the monofunctional alcohol, and the like described above) generated by the transesterification and unreacted raw materials (polyols (p1) to (p3)).

Among the above, in a case where the main agent contains the reaction product (ii), a higher degree of both strength and elongation in mechanical properties can be achieved, and durability under heat conditions and wet heat conditions tends to be improved. The content of the reaction product (ii) may be 10% by mass or more, 15% by mass or more, 20% by mass or more, or 30% by mass or more, and may be 95% by mass or less, 90% by mass or less, 65% by mass or less, 50% by mass or less, or 40% by mass or less, based on the total mass of the main agent. The content of the reaction product (ii) may be 10% to 50% by mass or 20% to 40% by mass based on the total mass of the main agent from the viewpoint of achieving a higher degree of both strength and elongation in mechanical properties and improving durability under heat conditions and wet heat conditions.

The ratio ((p1)/(p2)) of the amount of the polyol (p1) used to the amount of the polyol (p2) used to obtain the reaction product (i) is preferably 90/10 to 55/45, and more preferably 90/10 to 60/40 in terms of a mass ratio.

The ratio ((p1)/(p2 + p3)) of the amount of the polyol (p1) used to the total amount of the polyol (p2) and polyol (p3) used to obtain the reaction product (ii) is preferably 75/25 to 45/55, and more preferably 70/30 to 50/50 in terms of a mass ratio.

The average number of hydroxyl groups of the reaction products (i) and (ii) is preferably 2.1 to 3.5, and more preferably 2.2 to 3.0. In a case where the average number of hydroxyl groups is 3.5 or less, breaking strength and elongation at break in a tensile test are further improved, and in a case where the average number of hydroxyl groups is 2.1 or more, durability is further improved.

The average number of hydroxyl groups can be calculated, for example, based on the nominal number of functional groups as follows. Note that, in a case where the polyol (p3) is not used, the number of moles of the polyol (p3) is calculated as 0.

Average number of hydroxyl groups = [(number of hydroxyl groups of polyol (p1) $\times$ number of moles of polyol (p1)) + (number of hydroxyl groups of polyol (p2) $\times$ number of moles of polyol (p2)) + (number of hydroxyl groups of polyol (p3) $\times$ number of moles of polyol (p3))]/[(number of moles of polyol (p1)) + (number of moles of polyol (p2)) + (number of moles of polyol (p3))]

The average hydroxyl value of the reaction products (i) and (ii) is preferably 30 to 380 mgKOH/g, and more preferably 50 to 180 mgKOH/g. In a case where the average hydroxyl value is 30 mgKOH/g or more, the urethane group concentration does not get too low, and the breaking strength in the tensile test is further improved. In a case where the average hydroxyl value is 380 mgKOH/g or less, the urethane group concentration does not get too high, and the low-temperature flexibility is further improved. The average hydroxyl value of the reaction products (i) and (ii) may be 20 to 700 mgKOH or 30 to 300 mgKOH/g. Note that the average hydroxyl value includes a value measured by a method using an acetylating reagent in accordance with JIS K 1557-1:2007.

The reaction products (i) and (ii) are preferably in a liquid state at 25°C from the viewpoint of ease of handling, uniform dispersibility, improvement in physical properties of a coating film, and reduction in curing time/curing energy of the coating film.

The main agent may contain a reaction product (hereinafter, referred to as a "reaction product (iii)") of the polyol (p1) and the polyol (p3) in addition to the reaction products (i) and/or (ii) from the viewpoint of achieving a higher degree of both strength and elongation in mechanical properties and improving durability under heat conditions and wet heat conditions. For example, the main agent may include a mixture of the reaction product (i) and/or reaction product (ii) and the reaction product (iii).

The number-average molecular weight of the reaction product (iii) is preferably 300 to 5,000, more preferably 500 to 3,000. In a case where the number-average molecular weight of the reaction product (iii) is 300 or more, the low-temperature flexibility of the resulting coating is further improved. Furthermore, in a case where the number-average molecular weight of the reaction product (iii) is 5,000 or less, the coating strength is further improved.

The average hydroxyl value of the reaction product (iii) is preferably 20 to 380 mgKOH/g, and more preferably 30 to 250 mgKOH/g. In a case where the average hydroxyl value is 20 mgKOH/g or more, the urethane group concentration does not get too low, and the breaking strength in the tensile test is further improved. In a case where the average hydroxyl value is 380 mgKOH/g or less, the urethane group concentration does not get too high, and the low-temperature flexibility is further improved.

The reaction product (iii) is preferably in a liquid state at 25°C from the viewpoint of ease of handling, uniform dispersibility, improvement in physical properties of a coating film, and reduction in curing time/curing energy of the coating film.

The content of the reaction product (iii) may be 5% by mass or more, 10% by mass or more, 35% by mass or more, 50% by mass or more, or 60% by mass or more, and may be 90% by mass or less, 85% by mass or less, 80% by mass or less, or 70% by mass or less, based on the total mass of the main agent. The content of the reaction product (iii) may be 5% to 70% by mass or 10% to 80% by mass based on the total mass of the main agent from the viewpoint of achieving a higher degree of both strength and elongation in mechanical properties and improving durability under heat conditions and wet heat conditions.

The ratio of the content of the reaction product (iii) to the total content of the reaction products (i) and (ii) ((iii)/(i) + (ii)) may be 5/95 to 90/10, 10/90 to 85/15, or 60/40 to 80/20 in terms of a mass ratio from the viewpoint of being excellent in mechanical properties.

The content of the main agent may be adjusted within the range of a R value described later. The content of the main agent may be, for example, 20% by mass or more, 30% by mass or more, or 50% by mass or more, and may be 90% by mass or less, 85% by mass or less, or 80% by mass or less based on the total mass of the composition. The content of the main agent may be, for example, 20% to 90% by mass, 30% to 85% by mass, or 50% to 80% by mass based on the total mass of the composition.

(Curing Agent)

The curing agent contains a polyisocyanate component. The polyisocyanate component is a component composed of a compound having two or more isocyanates (polyisocyanate), and contains an isocyanate group-terminated urethane prepolymer having a segment derived from diphenylmethane diisocyanate (hereinafter, also referred to as "MDI") and a segment derived from polyether polyol.

The isocyanate group-terminated urethane prepolymer includes, for example, a compound obtained by reacting MDI with a polyether polyol such that the isocyanate group is excessive, and has a urethane bond generated by the reaction of MDI with a polyether polyol and an isocyanate group located at at least one terminal.

MDI includes three isomers of 4,4'-diphenylmethane diisocyanate (hereinafter, referred to as "4,4'-MDI"), 2,4' -diphenylmethane diisocyanate (hereinafter, referred to as "2,4'-MDI"), and 2,2' -diphenylmethane diisocyanate (hereinafter, referred to as "2,2'-MDI"), and as MDI, one of these isomers may be used singly, or in combination of two or more kinds thereof. Note that in the present specification, 4,4'-MDI may be referred to as a main component of MDI, and 2,4'-MDI and 2,2'-MDI may be referred to as isomer components.

The content of 4,4'-MDI in the MDI may be, for example, 40% to 100% by mass based on the total amount of MDI. The content of 2,4'-MDI in the MDI may be, for example, 0% to 60% by mass based on the total amount of MDI. The content of 2,2'-MDI in the MDI may be, for example, 0% to 5% by mass based on the total amount of MDI.

MDI is preferably MDI having a high content ratio of isomer components (high isomer ratio MDI) from the viewpoint of more excellent mechanical properties and ease of handling. Specifically, the total content of 2,4'-MDI and 2,2'-MDI is preferably 20% to 60% by mass based on the total amount of MDI. From the same viewpoint, the total content of 2,4'-MDI and 2,2'-MDI may be 40% by mass or more or 50% by mass or more, and may be 70% by mass or less or 60% by mass or less based on the total amount of MDI.

The content of a segment derived from MDI in the isocyanate group-terminated urethane prepolymer is preferably 20% to 80% by mass based on the total mass of the isocyanate group-terminated urethane prepolymer from the viewpoint of further excellent low-temperature flexibility, tensile strength, and heat resistance. From the same viewpoint, the content of the segment derived from MDI in the isocyanate group-terminated urethane prepolymer may be 25% by mass or more, 35% by mass or more, 45% by mass or more, or 50% by mass or more, and may be 75% by mass or less, 70% by mass or less, 60% by mass or less, or 55% by mass or less based on the total mass of the isocyanate group-terminated urethane prepolymer.

The polyether polyol has two or more ether units and two or more hydroxyl groups. Since the isocyanate group-terminated urethane prepolymer has a segment derived from polyether polyol, not only durability and low-temperature flexibility of a resin (for example, a coating) are improved, but also storage stability is improved, and an effect that crystallization at normal temperature (for example, 25°C) is minimized and an effect that handleability is improved by lowering the viscosity are obtained. Examples of the polyether polyol include polypropylene glycol, polyethylene glycol, and polytetramethylene ether glycol. Among these, polypropylene glycol is preferable from the viewpoint of achieving a higher degree of both durability and low-temperature flexibility of the resin (for example, a coating). These may be used singly or in combination of two or more kinds thereof.

The average number of hydroxyl groups of the polyether polyol is 2 or more, for example, 2 to 3. The number-average molecular weight of the polyether polyol is preferably 500 to 5,000 and more preferably 2,000 to 4,000.

The content of a segment derived from the polyether polyol in the isocyanate group-terminated urethane prepolymer is preferably 20% to 80% by mass based on the total mass of the isocyanate group-terminated urethane prepolymer from the viewpoint of further excellent low-temperature flexibility, tensile strength, and heat resistance. From the same viewpoint, the content of the segment derived from the polyether polyol in the isocyanate group-terminated urethane prepolymer may be 25% by mass or more, 30% by mass or more, 40% by mass or more, or 45% by mass or more, and may be 75% by mass or less, 65% by mass or less, 55% by mass or less, or 50% by mass or less based on the total mass of the isocyanate group-terminated urethane prepolymer.

The isocyanate group-terminated urethane prepolymer may have a segment derived from an isocyanate (other isocyanate) other than diphenylmethane diisocyanate. That is, the isocyanate group-terminated urethane prepolymer may include a compound obtained by the reaction of diphenylmethane diisocyanate, another isocyanate, and a polyether polyol.

Examples of other isocyanates include aromatic isocyanates other than MDI, aliphatic isocyanates, alicyclic isocyanates, aromatic aliphatic isocyanates, isocyanurate group-containing polyisocyanates obtained using these isocyanates as raw materials, uretdione group-containing polyisocyanates, uretdione group- and isocyanurate group-containing polyisocyanates, urethane group-containing polyisocyanates, allophanate group-containing polyisocyanates, biuret group-containing polyisocyanates, and uretimine group-containing polyisocyanates.

The content of a segment derived from another isocyanate in the isocyanate group-terminated urethane prepolymer may be 30% by mass or less or 0% by mass based on the total mass of the isocyanate group-terminated urethane prepolymer.

The isocyanate group-terminated urethane prepolymer is preferably in a liquid state at 25°C from the viewpoint of ease of handling, uniform dispersibility, improvement in physical properties of a coating film, and reduction in curing time/curing energy of the coating film.

The polyisocyanate component may contain one isocyanate group-terminated urethane prepolymer alone or may contain two or more isocyanate group-terminated urethane prepolymers.

The polyisocyanate component may consist only of an isocyanate group-terminated urethane prepolymer. The polyisocyanate component may contain a polyisocyanate (for example, MDI or the like as a raw material) other than the isocyanate group-terminated urethane prepolymer as long as the effect of the present invention is not impaired. The content of the isocyanate group-terminated urethane prepolymer in the polyisocyanate component may be, for example, 30% to 100% by mass based on the total mass of the polyisocyanate component.

The isocyanate group content (NCO content) of the polyisocyanate component is preferably 4% to 30% by mass, may be 5% by mass or more, 7% by mass or more, or 10% by mass or more, and may be 26% by mass or less or 20% by mass or less, from the viewpoint of low viscosity, good handleability, and more excellent heat resistance. The isocyanate group content in the entire isocyanate group-terminated urethane prepolymer contained in the polyisocyanate component may also be the same as the above-described range.

In one embodiment, the curing agent may contain a reaction product of MDI with a polyether polyol (hereinafter, referred to as a "reaction product (iv)"), and may contain a reaction product of MDI with another isocyanate and a polyether polyol (hereinafter, referred to as a "reaction product (v)"). These reaction products include at least the isocyanate group-terminated urethane prepolymers described above. Note that the details of MDI, the other isocyanate, and polyether polyol are the same as those described above, and thus the detailed description will not be repeated.

The reaction products (iv) and (v) may include a reaction mixture obtained by a urethanization reaction of the polyisocyanate and the polyether polyol. Therefore, the reaction products (iv) and (v) may contain by-products generated by the urethanization reaction or unreacted raw materials.

The amount of MDI used to obtain the reaction products (iv) and (v) is preferably 20% to 80% by mass based on the total mass of the reaction product from the viewpoint of further excellent low-temperature flexibility, tensile strength, and heat resistance. From the same viewpoint, the amount of MDI used to obtain the reaction products (iv) and (v) may be 25% by mass or more, 35% by mass or more, 45% by mass or more, or 50% by mass or more, and may be 75% by mass or less, 70% by mass or less, 60% by mass or less, or 55% by mass or less based on the total mass of the reaction product.

The amount of the polyether polyol used to obtain the reaction products (iv) and (v) is preferably 15% to 80% by mass based on the total mass of the reaction product from the viewpoint of further excellent low-temperature flexibility, tensile strength, and heat resistance. From the same viewpoint, the amount of the polyether polyol used to obtain the reaction products (iv) and (v) may be 20% by mass or more, 25% by mass or more, 30% by mass or more, 40% by mass or more, or 45% by mass or more, and may be 75% by mass or less, 65% by mass or less, 55% by mass or less, or 50% by mass or less based on the total mass of the reaction product.

The content of the curing agent may be adjusted within the range of a R value described later. The content of the curing agent may be, for example, 5% by mass or more, 10% by mass or more, 15% by mass or more, or 20% by mass or more, and may be 60% by mass or less, 55% by mass or less, 50% by mass or less, or 45% by mass or less based on the total mass of the composition. The content of the curing agent may be, for example, 5% to 60% by mass, 10% to 60% by mass, 15% to 55% by mass, 20% to 50% by mass, or 20% to 45% by mass based on the total mass of the composition.

(Catalyst)

The catalyst is a urethanization catalyst that catalyzes the reaction between the main agent and the curing agent, and includes a metal catalyst containing at least one metallic element selected from the group consisting of titanium, zinc, and aluminum. These may be used singly or in combination of two or more kinds thereof.

The metal catalyst may be a catalyst composed of a metallic element, or may be a metal complex (organometallic catalyst) in which metal atoms are bonded to one or more organic ligands.

Examples of the titanium-containing metal catalyst (titanium catalyst) include titanium 2-ethylhexanoate and tetrakis(2,4-pentanedionate)titanium(IV).

Examples of the zinc-containing metal catalyst (zinc catalyst) include bis(2-ethylhexanoic acid)zinc and bis(2,4-pentanedionato)zinc (II).

Examples of the aluminum-containing metal catalyst (aluminum catalyst) include aluminum monoacetylacetonate bis(ethylacetoacetate), tris(2,4-pentanedionato)aluminum (III), and aluminum 2-ethylhexanoate.

The catalyst may include a metal catalyst containing metallic elements other than titanium, zinc, and aluminum, or may contain a non-metal catalyst such as an amine catalyst as long as pot life and curability are not impaired.

The catalyst is preferably in a liquid state at 25°C from the viewpoint of ease of handling, uniform dispersibility, improvement in physical properties of a coating film, and reduction in curing time/curing energy of the coating film.

The content of the catalyst may be 0.05% by mass or more, 0.1% by mass or more, 0.2% by mass or more, or 0.3% by mass or more based on the total mass of the composition from the viewpoint of being excellent in the pot life, curability, and mechanical properties. The content of the catalyst may be 3.0% by mass or less, 2.5% by mass or less, 2.0% by mass or less, 1.5% by mass or less, or 1.0% by mass or less based on the total mass of the composition from the viewpoint of being excellent in the pot life, curability, and mechanical properties. From these viewpoints, the content of the catalyst may be, for example, 0.05% to 3.0% by mass, 0.05% to 2.5% by mass, 0.1% to 2.0% by mass, 0.2% to 1.5% by mass, or 0.3% to 1.0% by mass based on the total mass of the composition.

In a case where only a titanium catalyst is used as the catalyst, the content of the titanium catalyst is preferably 0.3% to 3.0% by mass based on the total mass of the composition. In a case where the content of the titanium catalyst is 0.3% by mass or more, curing tends to be completed in a short time under heating conditions, and in a case where the content of the titanium catalyst is 3.0% by mass or less, higher mechanical properties tend to be obtained. From the same viewpoint, the content of the titanium catalyst may be 0.4% by mass or more, and may be 2.5% by mass or less, 2.0% by mass or less, or 1.0% by mass or less.

In a case where only an aluminum catalyst is used as the catalyst, the content of the aluminum catalyst is preferably 0.15% to 3.0% by mass based on the total mass of the composition. In a case where the content of the aluminum catalyst is 0.15% by mass or more, curing tends to be performed in a short time under heating conditions, and in a case where the content of the aluminum catalyst is 3.0% by mass or less, higher mechanical properties tend to be obtained. From the same viewpoint, the content of the aluminum catalyst may be 0.5% by mass or more or 1.0% by mass or more, and may be 2.5% by mass or less or 2.0% by mass or less.

In a case where only a zinc catalyst is used as the catalyst, the content of the zinc catalyst is preferably 0.1% to 0.5% by mass based on the total mass of the composition. In a case where the content of the zinc catalyst is 0.1% by mass or more, curing tends to be performed in a short time under heating conditions, and in a case where the content of the aluminum catalyst is 0.5% by mass or less, the pot life is longer and higher mechanical properties tend to be obtained. From the same viewpoint, the content of the zinc catalyst may be 0.2% by mass or more, and may be 0.45% by mass or less.

(Additive)

The composition may contain, as an additive, a leveling agent, a plasticizer, a filler, a colorant, a flame retardant, an antioxidant, an ultraviolet absorber, a pigment/dye, an antibacterial agent, an antifungal agent, and the like. In a case where the composition is a multi-component composition, these additives may be contained in any liquid.

(Organic Solvent)

The composition may contain an organic solvent, but the content thereof is 0% to 10% by mass based on the total mass of the composition. The content of the organic solvent may be 9% by mass or less, 8% by mass or less, 7% by mass or less, 5% by mass or less, 3% by mass or less, or 1% by mass or less. Note that, in the present specification, the organic solvent is an organic compound generally used for dissolving a polyol and/or a polyisocyanate in the present technical field, and examples thereof include methyl ethyl ketone (MEK), N,N-dimethylformamide (DMF), tetrahydrofuran (THF), and ethyl acetate.

(R value)

The R value (the number of moles of all isocyanate groups in the curing agent/the number of moles of all hydroxyl groups in the main agent) is preferably 0.8 to 5.0 from the viewpoint of being excellent in all of reaction curability, strength and flexibility of the cured product, and reduction of unnecessary foaming. From the viewpoint of improving the series of effects, the R value is more preferably 0.9 to 3.0, and particularly preferably 1.0 to 2.0. In a case where the R value is 0.8 or more, the strength and flexibility of the polyurethane resin are further improved. When the R value is 5.0 or less, reaction curability is further improved, and occurrence of unnecessary foaming can be further reduced.

The polyurethane resin-forming composition described above is used for forming a molded product, a coating material, and the like in addition to an adhesive agent. Examples of the molded article include a member, a structure, a film, and a sheet, and may include a molded article formed by a known technique such as casting or coating. Specific examples thereof include members of electronic devices such as communication tablets, clothing, furniture and home electric appliances, household goods, and automobile members.

<Coating Agent>

Another aspect of the present disclosure is a coating agent containing the polyurethane resin-forming composition of the above-described embodiment. The coating agent may be any agent that is applied to a surface of a base material, and an adhesive agent is also included in the concept of the coating agent.

The coating agent may contain a crosslinking agent and/or an additive as the above-described additive. After the coating agent containing them is stirred to be uniform, the coating agent is applied onto the base material by a known technique such as spray coating, knife coating, wire bar coating, doctor blade coating, reverse roll coating, or calendar coating to form a coating film, and further cured to obtain a coating film (for example, a coating material).

The heating temperature during curing of the coating film is preferably 80°C to 180°C, and the heating time is preferably 30 seconds to 2 hours, and more preferably 1 minute to 30 minutes. In a case where the heating temperature and the heating time are within these ranges, occurrence of curing failure can be further reduced, and unnecessary heat history for the cured product and the base material can be reduced, so that the occurrence of deterioration can be further reduced.

Examples of the base material include a base material molded from materials such as stainless steel, phosphate-treated steel, galvanized steel, iron, copper, aluminum, brass, glass, acrylic resin, polycarbonate resin, polyethylene terephthalate resin, polyethylene naphthalate resin, polybutylene terephthalate resin, polystyrene resin, AS resin, ABS resin, polycarbonate-ABS resin, nylon 6 resin, nylon 6,6 resin, MXD6 nylon resin, polyvinyl chloride resin, polyvinyl alcohol resin, polyurethane resin, phenolic resin, melamine resin, polyacetal resin, chlorinated polyolefin resin, polyolefin resin, polyamide resin, polyetheretherketone resin, polyphenylene sulfide resin, NBR resin, chloroprene resin, SBR resin, SEBS resin, polyethylene, and polypropylene; organic fibers mainly including at least one selected from polyethylene terephthalate resin, polytrimethylene terephthalate resin, polybutylene terephthalate resin, polyethylene resin, polypropylene resin, polystyrene resin, nylon 6 resin, nylon 6,6 resin, acrylic resin, polyvinyl alcohol resin, cellulose, polylactic acid, cotton, and wool; inorganic fibers such as glass wool; and carbon fibers.

For the base material, the surface of the base material can be subjected to a treatment such as a corona discharge treatment, a flame treatment, an ultraviolet irradiation treatment, or an ozone treatment in advance in order to improve adhesiveness.

<Molded Body>

Another aspect of the present disclosure is a molded body containing the cured product of the polyurethane resin-forming composition of the above-described embodiment. The cured product contains a polyurethane resin. Examples of the molded body include members of electronic devices such as communication tablets, clothing, furniture and home electric appliances, household goods, and automobile members. These can be molded by a known technique such as casting or coating.

[Examples]

Hereinafter, Examples of the present invention will be described, but the present invention is not limited to these Examples. Note that % and part notation in Examples are on a mass basis unless otherwise specified.

Details of raw materials used in the present Examples are as follows.

(1) PCD-1:1,6-Hexanediol-based polycarbonate diol, a number-average molecular weight of 2,000
(2) PCD-2:1,6-Hexanediol-based polycarbonate diol, a number-average molecular weight of 3,000
(3) PCL-1: Polycaprolactone diol, a number-average molecular weight of 1,000 (trade name: PLACCEL 210, manufactured by Daicel Corporation)
(4) PCL-2: Polycaprolactone diol, a number-average molecular weight of 2,000 (trade name: PLACCEL 220, manufactured by Daicel Corporation)
(5) PCL-3: Polycaprolactone triol, a number-average molecular weight of 550 (trade name: PLACCEL 305, manufactured by Daicel Corporation)
(6) Low isomer ratio MDI: 2,2'-MDI + 2,4'-MDI = 1.5%, 4,4'-MDI = 98.5%, NCO content = 33.6%
(7) High isomer ratio MDI: 2,2'-MDI + 2,4'-MDI = 55.0%, 4,4'-MDI = 45.0%, NCO content = 33.6%
(8) PPG-1: Polypropylene glycol, a number-average molecular weight of 2,000 (trade name: Sannix PP-2000, manufactured by Sanyo Chemical Industries, Ltd.)
(9) PPG-2: Polypropylene glycol, a number-average molecular weight of 3,000 (trade name: Sannix PP-3000, manufactured by Sanyo Chemical Industries, Ltd.)
(10) Aluminum complex: K-KAT 5218 (manufactured by Kusumoto Chemicals, Ltd.)
(11) Zinc complex: K-KAT XK-635 (manufactured by Kusumoto Chemicals, Ltd.)
(12) Titanium complex: Titanium 2-ethylhexanoate (manufactured by FUJIFILM Wako Pure Chemical Corporation)
(13) Bismuth complex: Neostane U-600 (manufactured by Nitto Kasei Co., Ltd.)
(14) BYK-331: Polyether-modified polydimethylsiloxane (manufactured by BYK Chemie GmbH)

<Synthesis Example 1>

A reactor equipped with a stirrer, a thermometer, a heating device, and a cooling device was charged with 700 g of PCD-1 and 300 g of PCL-2, and the temperature was gradually increased to 190°C under a nitrogen stream. The transesterification reaction was performed at 190°C for 5 hours to obtain a reaction product (Polyol-1) containing a polycarbonate polyester diol. The obtained Polyol-1 had an average number of hydroxyl groups of 2.0, a hydroxyl value of 56.1 (mgKOH/g), and a number-average molecular weight (Mn) of 2,000.

<Synthesis Example 2>

A reactor equipped with a stirrer, a thermometer, a heating device, and a cooling device was charged with 664 g of PCD-1, 20 g of PCL-1, and 316 g of PCL-3, and the temperature was gradually increased to 190°C under a nitrogen stream. The transesterification reaction was performed at 190°C for 5 hours to obtain a reaction product (Polyol-2) containing a polycarbonate polyester polyol having three or more hydroxyl groups. The obtained Polyol-2 had an average number of hydroxyl groups of 2.6, a hydroxyl value of 136.2 (mg-KOH/g), and a number-average molecular weight (Mn) of 1,080.

<Synthesis Example 3>

A reactor equipped with a stirrer, a thermometer, a heating device, and a cooling device was charged with 678 g of PCD-2, 236 g of PCL-2, and 86 g of PCL-3, and the temperature was gradually increased to 190°C under a nitrogen stream. The transesterification reaction was performed at 190°C for 5 hours to obtain a reaction product (Polyol-3) containing a polycarbonate polyester polyol having three or more hydroxyl groups. The obtained Polyol-3 had an average number of hydroxyl groups of 2.3, a hydroxyl value of 64.8 (mg-KOH/g), and a number-average molecular weight (Mn) of 2,000.

[Table 1]

| | Synthesis Example 1 | Synthesis Example 2 | Synthesis Example 3 |
|---|---|---|---|
| | Polyol-1 | Polyol-2 | Polyol-3 |
| PCD-1 | 700 | 664 | - |
| PCD-2 | - | - | 678 |
| PCL-1 | - | 20 | - |
| PCL-2 | 300 | - | 236 |
| PCL-3 | - | 316 | 86 |
| Average number of hydroxyl groups | 2.0 | 2.6 | 2.3 |
| Hydroxyl value (mgKOH/g) | 56.1 | 136.2 | 64.8 |
| Number-average molecular weight (Mn) | 2000 | 1080 | 2000 |
| Physical properties (25°C) | Liquid state | Liquid state | Liquid state |

The average number of hydroxyl groups in Table 1 is a value calculated by the above-described calculation method.

<Synthesis Example 4>

A reactor equipped with a stirrer, a thermometer, a heating device, and a cooling device was charged with 790 g of the high isomer ratio MDI and 210 g of PPG-1, and a urethanization reaction was performed at 75°C for 3 hours under a nitrogen atmosphere to obtain a reaction product (Isocyanate-1) containing an isocyanate group-terminated urethane prepolymer. The NCO content was 25.5%. The viscosity at 25°C was 500 mPa·s.

<Synthesis Example 5>

A reactor equipped with a stirrer, a thermometer, a heating device, and a cooling device was charged with 240 g of the high isomer ratio MDI and 760 g of PPG-1, and a urethanization reaction was performed at 75°C for 3 hours under a nitrogen atmosphere to obtain a reaction product (Isocyanate-2) containing an isocyanate group-terminated urethane prepolymer. The isocyanate group content (NCO content) was 4.7%. The viscosity at 25°C was 8,500 mPa·s.

<Synthesis Example 6>

A reactor equipped with a stirrer, a thermometer, a heating device, and a cooling device was charged with 470 g of the high isomer ratio MDI and 530 g of PPG-1, and a urethanization reaction was performed at 75°C for 3 hours under a nitrogen atmosphere to obtain a reaction product (Isocyanate-3) containing an isocyanate group-terminated urethane prepolymer. The NCO content was 13.6%. The viscosity at 25°C was 1,300 mPa·s.

<Synthesis Example 7>

A reactor equipped with a stirrer, a thermometer, a heating device, and a cooling device was charged with 360 g of the high isomer ratio MDI and 640 g of PPG-1, and a urethanization reaction was performed at 75°C for 3 hours under a nitrogen atmosphere to obtain a reaction product (Isocyanate-4) containing an isocyanate group-terminated urethane prepolymer. The NCO content was 9.1%. The viscosity at 25°C was 3,700 mPa·s.

<Synthesis Example 8>

A reactor equipped with a stirrer, a thermometer, a heating device, and a cooling device was charged with 300 g of the high isomer ratio MDI and 700 g of PPG-1, and a urethanization reaction was performed at 75°C for 3 hours under a nitrogen atmosphere to obtain a reaction product (Isocyanate-5) containing an isocyanate group-terminated urethane prepolymer. The NCO content was 7.1%. The viscosity at 25°C was 6,400 mPa·s.

<Synthesis Example 9>

A reactor equipped with a stirrer, a thermometer, a heating device, and a cooling device was charged with 450 g of the low isomer ratio MDI and 550 g of PPG-2, and a urethanization reaction was performed at 75°C for 3 hours under a nitrogen atmosphere to obtain a reaction product (Isocyanate-6) containing an isocyanate group-terminated urethane prepolymer. The NCO content was 13.6%. The viscosity at 25°C was 3,000 mPa·s.

<Synthesis Example 10>

A reactor equipped with a stirrer, a thermometer, a heating device, and a cooling device was charged with 510 g of the high isomer ratio MDI and 490 g of Polyol-1, and a urethanization reaction was performed at 75°C for 3 hours under a nitrogen atmosphere to obtain a reaction product (Isocyanate-7) containing an isocyanate group-terminated urethane prepolymer. The NCO content was 15.0%. The viscosity at 25°C was 8,100 mPa·s.

[Table 2]

| | | Synthesis Example 4 | Synthesis Example 5 | Synthesis Example 6 | Synthesis Example 7 | Synthesis Example 8 | Synthesis Example 9 | Synthesis Example 10 |
|---|---|---|---|---|---|---|---|---|
| | | Isocyanate-1 | Isocyanate-2 | Isocyanate-3 | Isocyanate-4 | Isocyanate-5 | Isocyanate-6 | Isocyanate-7 |
| MDI | Low isomer ratio MDI | - | - | - | - | - | 450 | - |
| | High isomer ratio MDI | 790 | 240 | 470 | 360 | 300 | - | 510 |
| Polyol (denaturation agent) | PPG-1 | 210 | 760 | 530 | 640 | 700 | - | - |
| | PPG-2 | - | - | - | - | - | 550 | - |
| | Polyol-1 | - | - | - | - | - | - | 490 |
| NCO content (%) | | 25.5 | 4.7 | 13.6 | 9.1 | 7.1 | 13.6 | 15.0 |
| Physical properties (25°C) | | Liquid state | Liquid state | Liquid state | Liquid state | Liquid state | Liquid state | Liquid state |
| Viscosity (mPa·s at 25°C) | | 500 | 8500 | 1300 | 3700 | 6400 | 3000 | 8100 |

EP 4 624 505 A1

The NCO content in Table 2 was measured according to a method described in JISK1603-1 (Test Method for Aromatic Isocyanates Used as Polyurethane Raw Material). Furthermore, the viscosity was measured by the following apparatus and conditions.

· Test apparatus: Rotary B-type viscometer TV-22 (manufactured by Toki Sangyo Co., Ltd)
· Test rotation speed: 60 RPM

<Examples 1 to 18 and Comparative Examples 1 and 2>

Polyol-1 to 3 obtained in Synthesis Examples 1 to 3 were mixed at blending ratios shown in Tables 3 to 5 to prepare a main agent. Furthermore, any one of Isocyanate-1 to 7 obtained in Synthesis Examples 4 to 10 was prepared as a curing agent. Furthermore, materials shown in Tables 3 to 5 were prepared as catalysts and leveling agents.

The main agent, the curing agent, the catalyst, and the leveling agent were mixed according to the formulation shown in Tables 3 to 5. At this time, the blending amounts of the main agent and the curing agent were set so that the R value (the number of moles of all isocyanate groups in the curing agent/the number of moles of all hydroxyl groups in the main agent) was 1.1. Accordingly, polyurethane resin-forming compositions of Examples 1 to 18 and Comparative Examples 1 and 2 were obtained.

<Evaluations>

(Evaluation of Low-Temperature Flexibility)

The polyurethane resin-forming composition immediately after mixing was allowed to flow onto release paper and cast with a bar coater to form a film shape having a thickness of 100 $\mu$m. Then, the cast polyurethane resin-forming composition was placed into a drying device (precision incubator DF612S, manufactured by Yamato Scientific Co., Ltd.), and heated at 150°C for 1 to 2 minutes to form a coating. The obtained coating(semi-cured film) was pressure-bonded to a woven fabric (polyester-based commercially available product), and further heated at 150°C for 5 minutes to proceed with curing. The pressure bonding at this time was performed by reciprocating pressurization once with a 5 kg metal roller. Thereafter, curing was performed at 60°C for 18 hours to obtain a laminate including a cured film and a woven fabric. Using the obtained laminate, a flexo test was performed under the following apparatus and conditions, and the number of times of bending until cracking occurred in the coating was measured. In a case where the number of times until cracking occurred in the coating was 10,000 or more, it was evaluated that the low-temperature flexibility was good. The results are shown in Tables 3 to 5.

[Apparatus and Conditions]

· Test apparatus: Flexiometer FOM-100C (manufactured by DAIEI KAGAKU SEIKI MFG. co., ltd.)
· Bending reciprocation speed: 150 times/min
· Rotation angle: 22.5 degrees
· Temperature: -30°C

(Evaluation of Curability)

The polyurethane resin-forming composition immediately after mixing was allowed to flow onto release paper and cast with a bar coater to form a film shape having a thickness of 100 $\mu$m. Then, the cast polyurethane resin-forming composition was placed into a drying device (precision incubator DF612S, manufactured by Yamato Scientific Co., Ltd.), and heated at 150°C, and the time until the composition was semi-cured was measured by touching with a finger. The composition was considered to be semi-cured when the tack weakened, and the curability was evaluated as good, provided that the pre-cure time (the time required for semi-curing) was within 2 minutes. The results are shown in Tables 3 to 5. Note that the "time when the tack weakened" refers to a time when the composition does not adhere to the finger, but a fingerprint clearly remains in the composition.

(Evaluation of Stability)

When the polyurethane resin-forming composition was prepared, the main agent, the catalyst, and the leveling agent were mixed to prepare a mixed liquid, the liquid temperature of this mixed liquid was set to 25°C, and the mixed liquid was then mixed with the curing agent whose liquid temperature was adjusted to 25°C. The resulting liquid immediately after mixing (polyurethane resin-forming composition) was stirred at 300 rpm for 30 seconds using a stirrer, and then the time until the viscosity reached 90,000 mPa·s was measured. Provided that this time was 10 minutes or longer, it was evaluated that the pot life was sufficiently long and the stability was good. The results are shown in Tables 3 to 5. Note that the viscosity was measured by the following apparatus and conditions.

[Apparatus and Conditions]

· Test apparatus: Brookfield B-type viscometer
· Spindle: SC4-27
· Spindle rotation speed: 0.2 RPM

(Evaluation of Tensile Properties)

The polyurethane resin-forming composition immediately after mixing was allowed to flow onto release paper and cast with a bar coater to form a film having a thickness of 100 μm. Then, the cast polyurethane resin-forming composition was cured by heating at 150°C for 10 minutes, and then aged at 60°C for 18 hours to obtain a cured coating (film) containing a polyurethane resin.

[ Normal State Durability Evaluation]

The breaking strength of the film obtained as described above was measured under the following apparatus and conditions in accordance with JIS K6251. Provided that the breaking strength was 15 MPa or more, the durability in a normal state was evaluated as good. The results are shown in Tables 3 to 5. Note that, in the table, "-" indicates unmeasured (the same applies hereinafter).

[Apparatus and Conditions]

· Test apparatus: Autocom universal tester AC-10KN-CM-PL (manufactured by TSE Co., Ltd.)
· Measurement conditions: 25°C × 50%RH
· Head speed: 200 mm/min
· Dumbbell No. 4

[Evaluation of Heat Resistance]

A heat resistance test was performed on the film (cured coating containing polyurethane resin) obtained as described above, and the breaking strength retention rate after the test was measured. Specifically, first, the film was placed in an air blowing constant temperature incubator DNE850 (manufactured by Yamato Scientific Co., Ltd.), and allowed to stand at 120°C for 400 hours. Next, the breaking strength of the film after the test was measured in the same manner as in the case of the normal state durability evaluation. Using the breaking strength (T0) of the film obtained in the normal state durability evaluation and the breaking strength (T1) of the film after the test, the breaking strength retention rate was calculated from the following equation. Provided that the breaking strength retention rate was 60% or more, it was evaluated that the heat resistance was good. The results are shown in Tables 3 to 5.

$$\text{Breaking strength retention rate (\%)} = T1/T0 \times 100$$

[Evaluation of Wet Heat Resistance]

A wet heat resistance test was performed on the film (cured coating containing polyurethane resin) obtained as described above, and the breaking strength retention rate after the test was measured. Specifically, first, the film was placed in a Low Temperature Constant Temperature and Humidity Chamber GLMP-62 (manufactured by Futaba Kagaku Co., Ltd.), and allowed to stand for 400 hours under conditions of 80°C and a humidity of 95%RH. Next, the breaking strength of the film after the test was measured in the same manner as in the case of the normal state durability evaluation.

Using the breaking strength (T0) of the film obtained in the normal state durability evaluation and the breaking strength (T2) of the film after the test, the breaking strength retention rate was calculated from the following equation. Provided that the breaking strength retention rate was 60% or more, it was evaluated that the wet heat resistance was good. The results are shown in Tables 3 to 5.

$$\text{Breaking strength retention rate (\%)} = T2/T0 \times 100$$

[Table 3]

| | | Example 1 | Example 2 | Example 3 | Example 4 | Example 5 | Example 6 | Comparative Example 1 | Comparative Example 2 |
|---|---|---|---|---|---|---|---|---|---|
| Main agent | Polyol-2 | 20.9 | 20.9 | 20.9 | 20.9 | - | 20.9 | 20.9 | 20.9 |
| | Polyol-1 | 58.7 | 45.1 | 33.6 | 25.5 | 4.0 | 11.4 | 45.1 | 47.9 |
| | Polyol-3 | - | - | - | - | 64.1 | - | - | - |
| | Isocyanate-1 | 20.4 | - | - | - | - | - | - | - |
| Curing agent | Isocyanate-2 | - | - | - | - | - | 67.7 | - | - |
| | Isocyanate-3 | - | 34.0 | - | - | - | - | 34.0 | - |
| | Isocyanate-4 | - | - | 45.5 | - | - | - | - | - |
| | Isocyanate-5 | - | - | - | 53.5 | - | - | - | - |
| | Isocyanate-6 | - | - | - | - | 31.9 | - | - | - |
| | Isocyanate-7 | - | - | - | - | - | - | - | 31.2 |
| Catalyst | Aluminum complex | 0.5 | 0.5 | 0.5 | 0.5 | 0.5 | 0.5 | - | 0.5 |
| | Bismuth complex | - | - | - | - | - | - | 0.09 | - |
| Leveling agent | BYK-331 | 1 | 1 | 1 | 1 | 1 | 1 | 1 | 1 |
| Rvalue | NCO/OH | 1.1/1.0 | 1.1/1.0 | 1.1/1.0 | 1.1/1.0 | 1.1/1.0 | 1.1/1.0 | 1.1/1.0 | 1.1/1.0 |
| Low-temperature flexibility | The number of times of bending [times] | 10000 | 15000 | 35000 | 15000 | 15000 | 40000 | 15000 | 3000 |
| Curability | Pre-curing time | Less than 1 minute | Less than 1 minute | Less than 1 minute | Less than 1 minute | Less than 1 minute | Less than 1 minute | 1 minute 30 seconds | Less than 1 minute |
| Stability | Pot life [minutes] | 30 or more | 30 or more | 30 or more | 30 or more | 30 or more | 30 or more | 6 | 30 or more |
| Tensile properties | Normal state durability (breaking strength) [MPa] | 20 | 21 | 30 | 17 | 18 | 8 | 20 | 32 |
| | Heat resistance (breaking strength retention rate) [%] | 68 | 66 | 65 | 61 | 61 | 20 | 62 | 75 |
| | Wet heat resistance (breaking strength retention rate) [%] | 69 | 69 | 68 | 64 | 60 | 65 | 64 | 26 |

[Table 4]

| | | Example 7 | Example 8 | Example 9 | Example 10 |
|---|---|---|---|---|---|
| Main agent | Polyol-2 | 20.9 | 20.9 | 20.9 | 20.9 |
| | Polyol-1 | 45.1 | 45.1 | 45.1 | 45.1 |
| Curing agent | Isocyanate-3 | 34.0 | 34.0 | 34.0 | 34.0 |
| Catalyst | Aluminum complex | 0.3 | 1.0 | 0.1 | 2.0 |
| Leveling agent | BYK-331 | 1 | 1 | 1 | 1 |
| R value | NCO/OH I | 1.1/1.0 | 1.1/1.0 | 1.1/1.0 | 1.1/1.0 |
| Low-temperature flexibility | The number of times of bending [times] | 15000 | 15000 | 15000 | 15000 |
| Curability | Pre-curing time | 2 minutes | Less than 1 minute | 1 minute 30 seconds | Less than 1 minute |
| Stability | Pot life [minutes] | 30 or more | 30 or more | 30 or more | 30 or more |
| Tensile properties | Normal state durability (breaking strength) [MPa] | 17 | 24 | - | - |
| | Heat resistance (breaking strength retention rate) [%] | - | 64 | - | - |
| | Wet heat resistance (breaking strength retention rate) [%] | - | - | - | - |

[Table 5]

| | | Example 11 | Example 12 | Example 13 | Example 14 | Example 15 | Example 16 | Example 17 | Example 18 |
|---|---|---|---|---|---|---|---|---|---|
| Main agent | Polyol-2 | 20.9 | 20.9 | 20.9 | 20.9 | 20.9 | 20.9 | 20.9 | 20.9 |
| | Polyol-1 | 45.1 | 45.1 | 45.1 | 45.1 | 45.1 | 45.1 | 45.1 | 45.1 |
| Curing agent | Isocyanate-3 | 34.0 | 34.0 | 34.0 | 34.0 | 34.0 | 34.0 | 34.0 | 34.0 |
| Catalyst | Zinc complex | 0.2 | 0.3 | 0.39 | - | - | - | - | - |
| | Titanium complex | - | - | - | 0.5 | 0.7 | 1 | 2 | 3 |
| Leveling agent | BYK-331 | 1 | 1 | 1 | 1 | 1 | 1 | 1 | 1 |
| R value | NCO/OH I | 1.1/1.0 I | 1.1/1.0 | 1.1/1.0 I | 1.1/1.0 I | 1.1/1.0 I | 1.1/1.0 I | 1.1/1.0 I | 1.1/1.0 |
| Low-temperature flexibility | The number of times of bending [times] | 15000 | 15000 | 15000 | 15000 | 15000 | 15000 | 10000 | 10000 |
| Curability | Pre-curing time | 2 minutes | 2 minutes | 1 minute 30 seconds | 2 minutes | 2 minutes | 1 minute 30 seconds | 1 minute 30 seconds | 1 minute |
| Stability | Pot life [minutes] | 22 | 16 | 11 | 30 or more | 30 or more | 30 or more | 30 or more | 30 or more |
| Tensile properties | Normal state durability (breaking strength) [MPa] | 19 | 19 | 18 | 17 | 22 | 23 | 15 | - |
| | Heat resistance (breaking strength retention rate) [%] | - | - | 64 | - | - | - | - | - |
| | Wet heat resistance (breaking strength retention rate) [%] | - | - | 69 | - | - | - | - | - |

20

EP 4 624 505 A1

**Claims**

1. A polyurethane resin-forming composition comprising:

a main agent comprising a polyol component;
a curing agent comprising a polyisocyanate component; and
a catalyst, wherein
the polyol component comprises a first polyol comprising three or more hydroxyl groups and a second polyol comprising two hydroxyl groups,
the first polyol comprises a polycarbonate polyester polyol,
the polyisocyanate component comprises an isocyanate group-terminated urethane prepolymer comprising a segment derived from diphenylmethane diisocyanate and a segment derived from a polyether polyol,
the catalyst comprises a metal catalyst comprising at least one metallic element selected from the group consisting of titanium, zinc, and aluminum, and
a content of the organic solvent is 0% to 10% by mass.

2. The polyurethane resin-forming composition according to claim 1, wherein the first polyol comprises a polycarbonate polyester polyol comprising a structure formed by ring-opening addition polymerization of a cyclic ester compound.

3. The polyurethane resin-forming composition according to claim 1 or 2, wherein the second polyol comprises a diol comprising a carbonate group.

4. The polyurethane resin-forming composition according to claim 1 or 2, wherein the second polyol comprises a polycarbonate polyester diol.

5. The polyurethane resin-forming composition according to claim 1 or 2, wherein the main agent comprises a reaction product of a polycarbonate diol, a polyester polyol comprising three or more hydroxyl groups, and a polyester diol.

6. The polyurethane resin-forming composition according to claim 5, wherein the reaction product has an average number of hydroxyl groups of 2.1 to 3.5.

7. The polyurethane resin-forming composition according to claim 1 or 2, wherein a content of the segment derived from the polyether polyol in the isocyanate group-terminated urethane prepolymer is 20% to 80% by mass based on a total mass of the isocyanate group-terminated urethane prepolymer.

8. The polyurethane resin-forming composition according to claim 1 or 2, wherein the polyisocyanate component has an isocyanate group content of 4% to 30% by mass.

9. The polyurethane resin-forming composition according to claim 1 or 2, wherein the catalyst is in a liquid state at 25°C.

10. A polyurethane resin formed from the polyurethane resin-forming composition according to claim 1 or 2.

11. A molded body comprising a cured product of the polyurethane resin-forming composition according to claim 1 or 2.

12. A coating agent comprising the polyurethane resin-forming composition according to claim 1 or 2.

## INTERNATIONAL SEARCH REPORT

| | |
|---|---|
| International application No. | |
| | **PCT/JP2023/045575** |

### A. CLASSIFICATION OF SUBJECT MATTER

*C08G 18/40*(2006.01)i; *C08G 18/10*(2006.01)i; *C08G 18/22*(2006.01)i; *C08G 18/44*(2006.01)i; *C08G 18/48*(2006.01)i; *C08G 18/76*(2006.01)i; *C09D 7/63*(2018.01)i; *C09D 175/04*(2006.01)i

FI: C08G18/40 009; C08G18/44; C08G18/48; C08G18/10; C08G18/76 057; C08G18/22; C09D175/04; C09D7/63

According to International Patent Classification (IPC) or to both national classification and IPC

### B. FIELDS SEARCHED

Minimum documentation searched (classification system followed by classification symbols)

C08G18/00-18/87; C09D

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2012-241117 A (NIPPON POLYURETHANE IND. CO., LTD.) 10 December 2012 (2012-12-10) claims, paragraphs [0022]-[0030], examples, table 1 | 1-11 |
| A | | 12 |
| Y | JP 2018-95766 A (TOSOH CORP.) 21 June 2018 (2018-06-21) claims, paragraphs [0020], [0022], [0029], [0042], [0045], [0047], examples, table 1 | 1-11 |
| A | | 12 |
| Y | JP 2022-143014 A (TOSOH CORP.) 03 October 2022 (2022-10-03) claims, paragraphs [0023], [0027], [0028], [0036] | 1-11 |
| A | | 12 |
| Y | JP 2021-187882 A (TOSOH CORP.) 13 December 2021 (2021-12-13) claims, paragraphs [0110]-[0112] | 1-11 |

✓ Further documents are listed in the continuation of Box C.    ✓ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 March 2024** | **12 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
|---|
| **PCT/JP2023/045575** |

### C. DOCUMENTS CONSIDERED TO BE RELEVANT

| Category* | Citation of document, with indication, where appropriate, of the relevant passages | Relevant to claim No. |
|---|---|---|
| Y | JP 2016-74780 A (DIC CORP.) 12 May 2016 (2016-05-12)<br>claims, paragraph [0009] | 1-11 |
| Y | JP 11-349656 A (SUMITOMO RUBBER INDUSTRIES, LTD.) 21 December 1999 (1999-12-21)<br>claims, paragraph [0033] | 1-11 |
| Y | WO 2011/043090 A1 (HITACHI CHEMICAL COMPANY, LTD.) 14 April 2011 (2011-04-14)<br>claims, paragraph [0137] | 1-11 |
| A | WO 2022/260101 A1 (TOSOH CORP.) 15 December 2022 (2022-12-15)<br>claims | 1-12 |
| A | JP 2014-159548 A (TOYO INK SC HOLDINGS CO., LTD.) 04 September 2014 (2014-09-04)<br>claims | 1-12 |
| A | WO 2016/125893 A1 (TOSOH CORP.) 11 August 2016 (2016-08-11)<br>claims | 1-12 |

Form PCT/ISA/210 (second sheet) (July 2022)

23

**INTERNATIONAL SEARCH REPORT**
Information on patent family members

| International application No. |
| --- |
| **PCT/JP2023/045575** |

| Patent document cited in search report | | | Publication date (day/month/year) | Patent family member(s) | | | Publication date (day/month/year) |
| --- | --- | --- | --- | --- | --- | --- | --- |
| JP | 2012-241117 | A | 10 December 2012 | (Family: none) | | | |
| JP | 2018-95766 | A | 21 June 2018 | (Family: none) | | | |
| JP | 2022-143014 | A | 03 October 2022 | (Family: none) | | | |
| JP | 2021-187882 | A | 13 December 2021 | (Family: none) | | | |
| JP | 2016-74780 | A | 12 May 2016 | (Family: none) | | | |
| JP | 11-349656 | A | 21 December 1999 | (Family: none) | | | |
| WO | 2011/043090 | A1 | 14 April 2011 | US | 2012/0196977 | A1 | |
| | | | | claims, paragraph [0176] | | | |
| | | | | CN | 102549038 | A | |
| | | | | KR | 10-2012-0059634 | A | |
| WO | 2022/260101 | A1 | 15 December 2022 | (Family: none) | | | |
| JP | 2014-159548 | A | 04 September 2014 | WO | 2014/115521 | A1 | |
| | | | | CN | 104955913 | A | |
| WO | 2016/125893 | A1 | 11 August 2016 | CN | 107207901 | A | |
| | | | | KR | 10-2017-0115566 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022082441 A

- JP 2021107555 A